# EUROPEAN PATENT SPECIFICATION

(11) **EP 2 846 524 B1**
(45) Date of publication and mention of the grant of the patent: **11.10.2017**
(21) Application number: 14181634.8
(22) Date of filing: 20.08.2014
(51) Int. Cl.: H04M 1/725, H04M 1/73, H04W 52/02, G06F 3/12, G06F 21/30, G06F 1/32, G06F 21/42, G06F 21/60, H04B 5/00, H04W 4/00, H04W 84/12

(54) **Wireless communication apparatus, wireless communication method, program, and storage medium**
Drahtlose Kommunikationsvorrichtung, drahtloses Kommunikationsverfahren, Programm und Speichermedium
Appareil de communication sans fil, procédé de communication sans fil, programme et support de stockage

(30) Priority: 03.09.2013 JP 2013182012
(43) Date of publication of application: 11.03.2015
(73) Proprietor: CANON KABUSHIKI KAISHA, Ohta-ku Tokyo 146-8501 (JP)
(72) Inventor: Hagiwara, Yuichi, Ohta-ku, Tokyo (JP)
(74) Representative: Hitching, Peter Matthew

(56) References cited:
- EP-A2- 1 827 053
- US-A1- 2008 143 487
- US-A1- 2013 057 893
- US-A1- 2013 171 940
- US-A1- 2013 215 467

## Description

### BACKGROUND OF THE INVENTION

### Field of the Invention

The present invention relates to a technique for communication between wireless communication apparatuses that can perform short-distance wireless communication.

### Description of the Related Art

Some image forming apparatuses such as printers and multifunction peripherals have a user authentication function for managing permission for users. Radio Frequency Identification (RFID) tags can be used for such user authentication function. When an RFID tag is used, an image forming apparatus includes a tag reader/writer for reading/writing the RFID tag. More specifically, when an RFID tag is brought near the image forming apparatus, the tag reader/writer in the image forming apparatus reads authentication data from the RFID tag and performs user authentication based on the read authentication data.

Recent mobile terminals such as smartphones and tablet personal computers (PCs) and image forming apparatuses employs Near Field Communication (NFC), which is a short-distance wireless communication technique that is compatible with RFID. In NFC, three functions are defined. The first function is a reader/writer function, which realizes a function equivalent to that of a tag reader/writer for RFID tags. The second function is a card-emulation function, which realizes a function equivalent to that of an RFID tag. The third function is a peer-to-peer function, which realizes transmission and reception of various data by using NFC.

NFC-enabled mobile terminals can read and write data from/in an RFID card or an NFC card, by using the reader/writer function. Thus, a function equivalent to a user authentication function using an RFID tag can be realized between an NFC-enabled mobile terminal and an NFC-enabled image forming apparatus. In such a case, the image forming apparatus realizes a function equivalent to that of an RFID tag by using the NFC card-emulation function, and the mobile terminal writes authentication data in the image forming apparatus.

When a mobile terminal transmits image data to an image forming apparatus for printing, the mobile terminal uses longer-distance and larger-capacity wireless communication than NFC, such as wireless Local Area Network (LAN) and Bluetooth (registered trademark). Since no cables are required for communication, complicated work for connection is not necessary. However, unlike communication in which a mobile terminal and an image forming apparatus are clearly connected by cables, the image forming apparatus needs to determine a mobile terminal to be a peer (connection partner) from among a large number of unspecified mobile terminals.

Japanese Patent Application Laid-Open No. 2001-156723 discusses a wireless communication apparatus determining a peer by using wireless communication with directivity (directional wireless communication). After performing directional wireless communication to determine a peer, the wireless communication apparatus switches the connection to wireless communication without directivity such as to a wireless LAN. In Japanese Patent Application Laid-Open No. 2001-156723, Infrared Data Association (IrDA) is used as directional wireless communication. Japanese Patent Application Laid-Open No. 2007-267370 discusses an information processing apparatus, which first determines a mobile terminal to be a peer by using a non-contact IC card capable of short-distance wireless communication and next establishes wireless communication such as a wireless LAN with this mobile terminal.

With growing environmental awareness, there are image forming apparatuses with a power saving mode. For example, when not used for a certain period of time, these image forming apparatuses shift to a low power consumption state (for example, a sleep mode). In such a low power consumption state, power supply to various functions is shut off, except for some functions such as a network interface in the image forming apparatus. It takes several seconds to several tens of seconds for an image forming apparatus to restart from a low power consumption state. NFC is established when a user places a mobile terminal close to (approximately 10 [cm]) the image forming apparatus, for example. Normally, the duration of time for which a mobile terminal is placed close to an image forming apparatus is shorter than the duration of time required for the image forming apparatus to shift back to a normal power supply state from the low power consumption state. Therefore, even if the mobile terminal attempts to perform NFC with the image forming apparatus in the low power consumption state, the mobile terminal is moved away from the NFC area before the image forming apparatus restarts. As a result, since NFC cannot be performed, processing such as user authentication using NFC and establishment of a wireless LAN cannot be performed.

US 2008/0143487 describes enabling interrupts for RFID tags. An RFID tag is provided with an output signal that can notify another chip in a system, or another function within the same IC, that a read of the RFID's information has taken place. The output signal would awaken a microcontroller from a low power sleep mode. The awakened microcontroller can be designed to perform a higher-level function than that that supported by the RFID tag.

US 2013/0171940 describes enabling a user to transmit an image folder easily and instinctively without performing a complicated communication process setting. The user touches a transmission icon of a mobile electronic device as a first transmission operation and moves an IC card closer to the mobile electronic device as a second transmission operation. A CPU generates a basic connection data and a communication connection condition data. The CPU detects a simple transmission SSID and designates an access point. When the user moves the IC card closer to a stationary electronic device as a third transmission operation, the CPU performs a client setting. When a fourth transmission operation is performed, the CPU transmits the image folder. Accordingly, the user can transmit a desired data from the mobile electronic device to the stationary electronic device easily and with simple and instinctive operations.

US 2013/0215467 describes leveraging near field communications (NFC) in conjunction with printer devices, interfacing with printers configured to use near filed communications using NFC enabled readers and output media, and using a smartphone to access data stored on an NFC tag associated with the printer.

US 2013/0057893 describes an image forming apparatus, including a storage unit wirelessly accessible form an external device, switches its operation mode related to wireless access of the image forming apparatus between an active mode in which a signal for wirelessly connecting to an external device is transmitted and a passive mode enabling access to the storage unit in response to a signal for wireless connection from an external device.

### SUMMARY OF THE INVENTION

The present invention is directed to a wireless communication apparatus and a wireless communication method capable of performing short-distance wireless communication with other apparatuses even when the wireless communication apparatus is in a low power consumption state.

According to an aspect of the present invention, there is provided an image processing apparatus as specified in claims 1 to 8. According to a second aspect of the present invention, there is provided a method for controlling an information processing apparatus as specified in claims 9. According to a third aspect of the present invention, there is provided a computer readable storage medium that stores a program for controlling the image processing apparatus as specified in claim 10. According to a fourth aspect of the present invention, there is provided a computer executable program for controlling the image processing apparatus as specified in claim 11.

Further features of the present invention will become apparent from the following description of exemplary embodiments with reference to the attached drawings.

### BRIEF DESCRIPTION OF THE DRAWINGS

Fig. 1 illustrates an overall configuration of a system.
Fig. 2 illustrates a schematic configuration of an image forming apparatus.
Fig. 3 illustrates a configuration of a mobile terminal.
Fig. 4 is a flowchart illustrating a procedure of user authentication processing performed by the image forming apparatus.
Fig. 5 illustrates a guiding image.
Fig. 6 is a flowchart illustrating a procedure of processing performed when the mobile terminal establishes a wireless LAN communication.
Fig. 7 is a connection sequence diagram illustrating a procedure for establishing wireless LAN communication.
Fig. 8 is a flowchart illustrating a procedure of user authentication processing performed by an image forming apparatus.
Fig. 9 is a flowchart illustrating a procedure of processing performed when a mobile terminal establishes wireless LAN communication.
Fig. 10 illustrates a guiding image.
Fig. 11 is a connection sequence diagram illustrating a procedure for establishing wireless LAN communication.

### DESCRIPTION OF THE EMBODIMENTS

Various exemplary embodiments, features, and aspects of the invention will be described in detail below with reference to the drawings. The constituent elements described in the following exemplary embodiments are merely used as examples, and the scope of the present invention is not limited to such constituent elements.

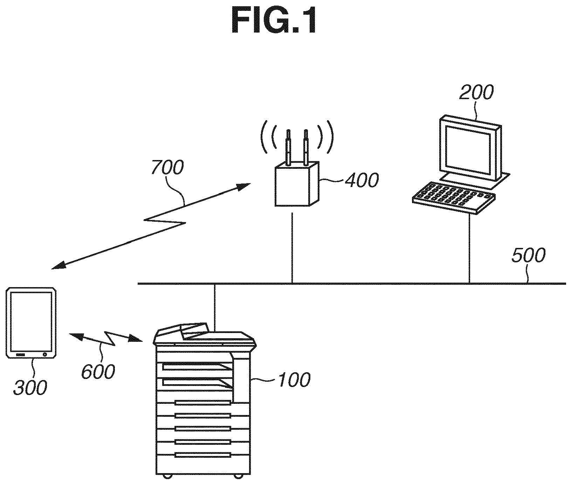

Fig. 1 illustrates an overall configuration of a system according to a first exemplary embodiment. The system includes an image forming apparatus 100 such as a printer and a multifunction peripheral, a computer terminal 200, a mobile terminal 300, and a wireless LAN master unit 400. In this system, these components are connected to each other via a network 500 such as a LAN and communicate with each another. The network 500 is realized by Ethernet (registered trademark) or the like. Short-distance wireless communication (hereinafter, referred to as "NFC communication") 600 can be performed between the image forming apparatus 100 and the mobile terminal 300. Longer-distance and larger-capacity wireless communication (hereinafter, referred to as "wireless LAN communication") 700 than the short-distance wireless communication can be performed between the mobile terminal 300 and the wireless LAN master unit 400. However, the wireless LAN communication 700 is merely an example, and another communication method may be used as long as the method achieves longer-distance and larger-capacity wireless communication than the short-distance wireless communication.

The image forming apparatus 100 is realized by a copying machine, a multifunction peripheral, or the like having copy, print, and scan functions. In addition, the image forming apparatus 100 includes a function of authenticating users using the above functions. The image forming apparatus 100 performs user authentication of an authentication card (not illustrated) or the mobile terminal 300 in which ID data (identification information) for identifying a user is stored. The ID data is an example of authentication data. The image forming apparatus 100 receives the ID data stored in the authentication card or the mobile terminal 300 via the NFC communication 600 and performs the user authentication by referring to an internal authentication database (not illustrated). Alternatively, the user authentication may be performed by separately arranging a server including an authentication database on the network 500. In this case, the image forming apparatus 100 transmits the ID data to the server and receives an authentication result from the server.

The computer terminal 200 transmits a print job to the image forming apparatus 100. In addition, the computer terminal 200 can display electronic data obtained by a scanner function or the like in the image forming apparatus 100.

The mobile terminal 300 is a portable wireless communication apparatus such as a smartphone and a tablet PC. The mobile terminal 300 can perform the NFC communication 600 and the wireless LAN communication 700. The mobile terminal 300 exchanges various data such as IP addresses and user ID data with the image forming apparatus 100 via the NFC communication 600. In addition, the mobile terminal 300 performs communication with various apparatuses connected to the network 500 by using the wireless LAN communication 700 via the wireless LAN master unit 400. In other words, the wireless LAN master unit 400 relays communication between an apparatus such as the mobile terminal 300 that makes access by using the wireless LAN communication 700 and an apparatus connected to the network 500.

### <Image Forming Apparatus>

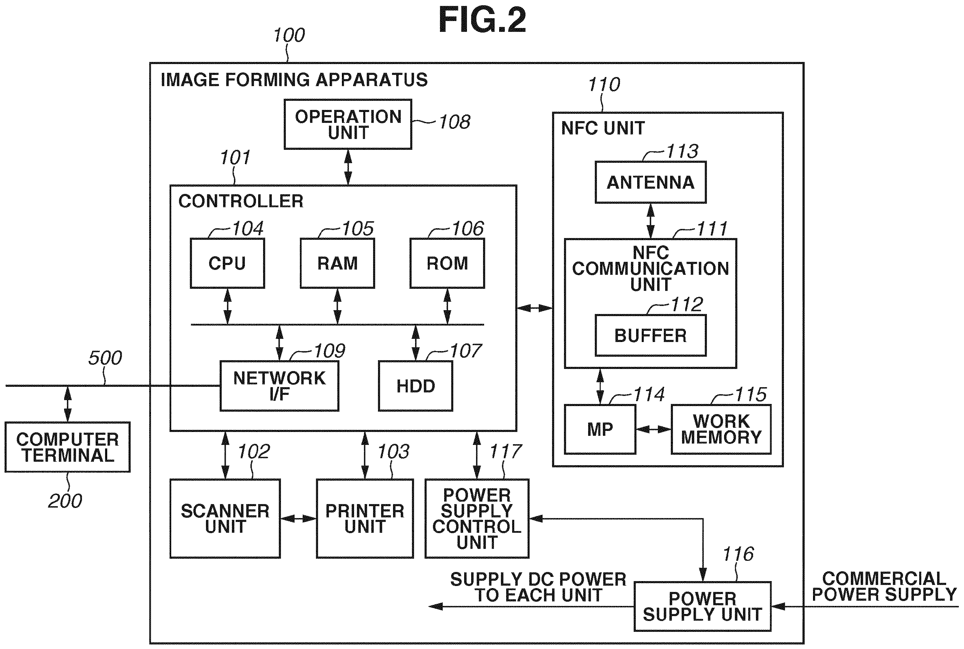

Fig. 2 illustrates a schematic configuration of the image forming apparatus 100. The image forming apparatus 100 includes a controller 101, a scanner unit 102, a printer unit 103, an operation unit 108, an NFC unit 110, a power supply unit 116, and a power supply control unit 117. The scanner unit 102 is an image input device that scans documents and acquires images. The printer unit 103 is an image output device that performs image forming processing on paper or the like. The controller 101 controls operations of the scanner unit 102 and the printer unit 103. The scanner unit 102 and the printer unit 103 can have various configurations based on conventional techniques.

The controller 101 includes a central processing unit (CPU) 104 that controls an overall operation of the image forming apparatus 100. The CPU 104 executes a computer program read from a read only memory (ROM) 106 while using a random access memory (RAM) 105 as a work area.

In addition, the controller 101 includes a hard disk drive (HDD) 107 and a network interface (I/F) 109. The HDD 107 is a large-capacity storage device storing software programs relating to control of the image forming apparatus 100, various settings, image data, and documents, for example. In addition, the above authentication database is included in the HDD 107. The network I/F 109 is an interface for performing communication with other apparatuses on the network 500 (with the computer terminal 200 in Fig. 2) via the network 500.

The operation unit 108 is an input/output interface including a touch panel with operation buttons and a display. A user can input data, and check information on the display on the operation unit 108.

The NFC unit 110 includes an NFC communication unit 111 including a buffer 112, an antenna 113 transmitting and receiving radio waves used for the NFC communication 600, a micro processor (MP) 114, and a work memory 115. The MP 114 communicates with the CPU 104 in the controller 101 and controls the NFC unit 110 while using the work memory 115 as a work area. The NFC unit 110 realizes the reader/writer function, the card-emulation function, and the peer-to-peer function. Since the NFC unit 110 enables the NFC communication 600, the image forming apparatus 100 is also a wireless communication apparatus.

The NFC communication unit 111 performs the NFC communication 600 with the other apparatuses. The buffer 112 is a first-in first-out (FIFO) memory and stores data transmitted/received via the NFC communication 600. The buffer 112 has a minimum storage capacity sufficient to perform the NFC communication 600. Thus, data stored in the buffer 112 can easily be overwritten.

The power supply unit 116 supplies direct-current (DC) power generated from a commercial power supply to each of the units such as the controller 101, the scanner unit 102, the printer unit 103, and the NFC unit 110 in the image forming apparatus 100. The power supply unit 116 includes a switch that shuts off the DC power supply to various units, in response to a control signal from the power supply control unit 117. For example, when the image forming apparatus 100 shifts to the low power consumption state, the power supply control unit 117 transmits a control signal to the power supply unit 116 and causes the power supply unit 116 to supply the DC power only to a minimum number of units.

According to the present exemplary embodiment, in the low power consumption state, the DC power is supplied only to the network I/F 109, the power supply control unit 117, and the NFC unit 110. Since the controller 101 consumes a large amount of power, the DC power is not supplied to the controller 101. The other components may be supplied with the DC power. However, the DC power is not supplied to components that consume a large amount of power. Alternatively, in the low power consumption state, only the DC power supplied to the operation unit 108 and the scanner unit 102 may be shut off. In addition, in the low power consumption state, a plurality of configurations for supplying the DC power may be provided, and the DC power supplied to the units may be sequentially shut off at regular intervals. In other words, the low power consumption state is a state in which the image forming apparatus 100 requires less power consumption than that required in a normal operation.

### <Mobile Terminal>

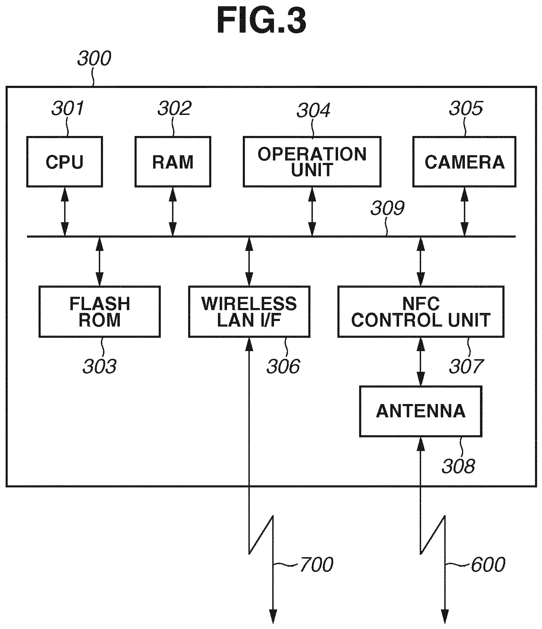

Fig. 3 illustrates a configuration of the mobile terminal 300. The mobile terminal 300 includes a CPU 301, a RAM 302, a flash ROM 303, an operation unit 304, a camera 305, a wireless LAN I/F 306, an NFC control unit 307, and an antenna 308. These components are connected with each other so that these components can exchange data with each other via a system bus 309.

The CPU 301 controls an overall operation of the mobile terminal 300. The CPU 301 executes a computer program read from the flash ROM 303 while using the RAM 302 as a work area. Other than such a computer program, various data is stored in the flash ROM 303.

The operation unit 304 is an input/output interface including a touch panel with a display. A user can input data and check information on the display on the operation unit 304. The camera 305 is an imaging apparatus that captures still images and moving images. The wireless LAN I/F 306 is an interface for performing the wireless LAN communication 700 with the other apparatuses (for example, with the wireless LAN master unit 400). The NFC control unit 307 is an interface for performing the NFC communication 600 with the other apparatuses capable of the NFC communication 600 (e.g., with the image forming apparatus 100). The antenna 308 transmits and receives radio waves for the NFC communication 600. The NFC control unit 307 realizes the reader/writer function and the peer-to-peer function. Unlike the image forming apparatus 100, the NFC control unit 307 in the mobile terminal 300 does not have a card-emulation function.

### <Processing by Image Forming Apparatus>

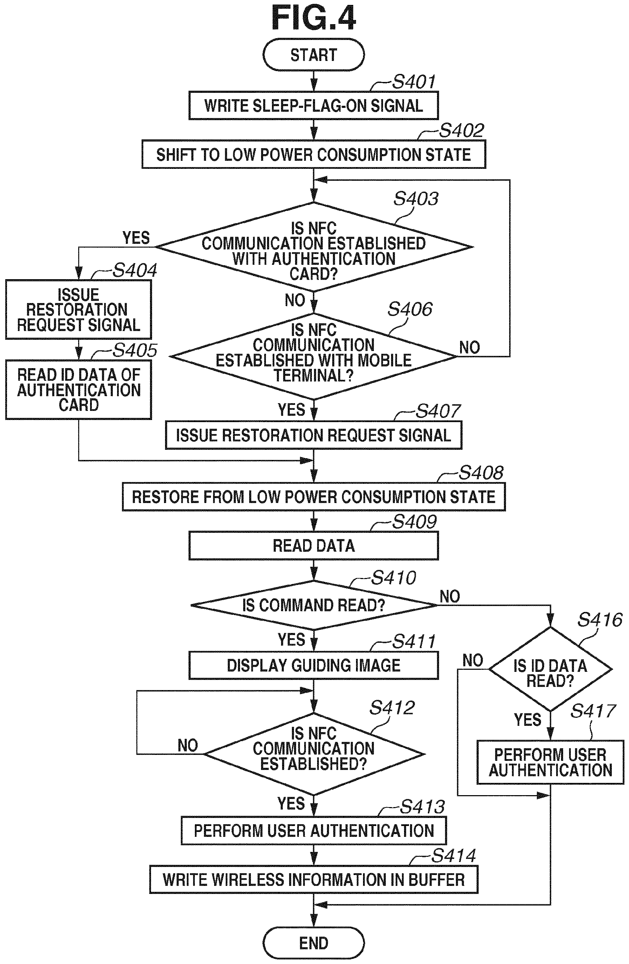

Fig. 4 is a flowchart illustrating a procedure of user authentication processing performed by the image forming apparatus 100 in the low power consumption state. The image forming apparatus 100 can perform user authentication of an authentication card and the mobile terminal 300. In this flowchart, when the image forming apparatus 100 performs user authentication of the mobile terminal 300, settings for establishing the wireless LAN communication 700 between the image forming apparatus 100 and the mobile terminal 300 are made.

When the image forming apparatus 100 is not used for a predetermined period of time or when the image forming apparatus 100 receives an instruction from a user via the operation unit 108, the CPU 104 in the image forming apparatus 100 causes the image forming apparatus 100 to shift to the low power consumption state. First, in step S401, the CPU 104 writes a sleep-flag-on signal in the buffer 112 in the NFC unit 110. The sleep-flag-on signal is a flag signal indicating that the image forming apparatus 100 is in the low power consumption state. The CPU 104 writes the sleep-flag-on signal in the buffer 112 when the image forming apparatus 100 is in the low power consumption state. On the other hand, the CPU 104 writes a sleep-flag-off signal when the image forming apparatus 100 shifts back to the normal power supply state from the low power consumption state. In step S402, after writing the sleep-flag-on signal in the buffer 112, the CPU 104 causes the power supply control unit 117 to control the power supply unit 116 to shift the image forming apparatus 100 to the low power consumption state. Controlled by the power supply control unit 117, the power supply unit 116 appropriately shuts off the power supply to relevant components. Since the power supply to the CPU 104 is shut off, processing by the CPU 104 is stopped while the image forming apparatus 100 is in the low power consumption state.

When the image forming apparatus 100 is in the low power consumption state, the NFC communication unit 111 therein waits while switching between the reader/writer function and the card-emulation function. The NFC communication unit 111 waits until the mobile terminal 300 or an authentication card comes close to the image forming apparatus 100 and the NFC communication 600 is established. The NFC communication unit 111 can establish the NFC communication 600 with the mobile terminal 300 while realizing the card-emulation function. The NFC communication unit 111 can establish the NFC communication 600 with an authentication card while realizing the reader/writer function.

In step S403, the MP 114 determines whether the NFC communication 600 is established with the authentication card while the NFC communication unit 111 is realizing the reader/writer function. If the NFC communication 600 is established with the authentication card (YES in step S403), the operation proceeds to step S404. In step S404, the MP 114 issues a restoration request signal for requesting a restoration from the low power consumption state to the normal power supply state to the control unit 117. In step S405, the MP 114 reads ID data of the authentication card via the NFC communication 600 and writes the read ID data in the buffer 112.

If the NFC communication 600 is not established with the authentication card (NO in step S403), the operation proceeds to step S406. If in step S406, the MP 114 determines whether the NFC communication 600 is established with the mobile terminal 300 while the NFC communication unit 111 is realizing the card-emulation function. If the NFC communication 600 is established with the mobile terminal 300 (YES in step S406), the operation proceeds to step S407. In step S407, the MP 114 issues a restoration request signal to the power supply control unit 117. In this case, the mobile terminal 300 writes a "command" in the buffer 112. This command is an instruction for displaying an instruction image for requesting the user of the mobile terminal 300 to perform the NFC communication 600 again via the NFC communication 600.

In step S408, in response to the restoration request signal issued in step S404 or S407, the power supply control unit 117 causes the power supply unit 116 to shift to the normal power supply state and to supply power to each component. When the power supply unit 116 is shifted to the normal power supply state, the MP 114 shifts the processing of the NFC unit 110 to the CPU 104. In step S409, the CPU 104 reads the data from the buffer 112. After reading the data from the buffer 112, the CPU 104 writes a sleep-flag-off signal in the buffer 112.

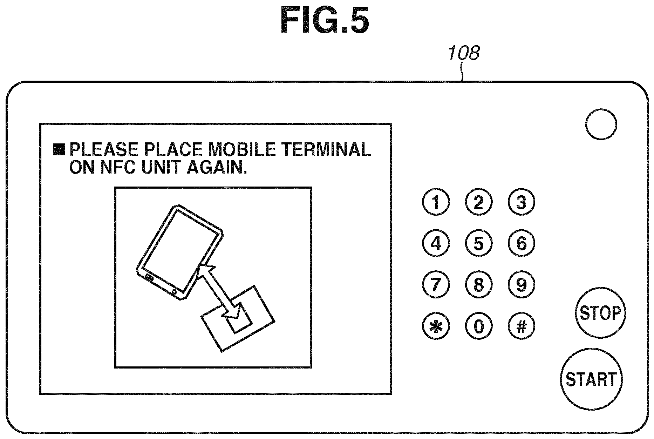

In step S410, the CPU 104 determines whether the read data is the command written by the mobile terminal 300. If the CPU 104 determines that the read data is the command written by the mobile terminal 300 (YES in step S410), the operation proceeds to step S101. In step S411, the CPU 104 in the image forming apparatus 100 displays a guiding image illustrated in Fig. 5 on the display of the operation unit 108 in response to the command. This guiding image requests the user to place the mobile terminal 300 close to the image forming apparatus 100. In step S412, the CPU 104 determines whether the user places the mobile terminal 300 close to the image forming apparatus 100 again in accordance with the guiding image and the NFC communication 600 is re-established. If the CPU 104 determines that the user places the mobile terminal 300 close to the image forming apparatus 100 again (YES in step S412), the mobile terminal 300 writes ID data thereof in the buffer 112 via the NFC communication 600. Then, the operation proceeds to step S413. In step S413, the CPU 104 reads the ID data of the mobile terminal 300 written in the buffer 112, refers to the authentication database established in the HDD 107, and performs user authentication. In step S414, after the user authentication, in response to a request from the mobile terminal 300, the CPU 104 writes wireless information in the buffer 112. Then, the CPU 104 ends the processing. By writing the wireless information in the buffer 112, the image forming apparatus 100 can provide the wireless information to the mobile terminal 300. The mobile terminal 300 reads the wireless information via the NFC communication 600. The wireless information includes information such as an IP address of the image forming apparatus 100 and a service set identifier (SSID) for connection between the image forming apparatus 100 and the mobile terminal 300 via the wireless LAN master unit 400.

If the data read in step S410 is not the command (NO in step S410), the operation proceeds to step S416. In step S416, the CPU 104 determines whether the read data is the ID data written in the buffer 112 in step S405. If the CPU 104 determines that the read data is the ID data (YES in step S416), the operation proceeds to step S417. In step S417, the CPU 104 performs user authentication as in step S413. Next, the CPU 104 ends the processing. If the read data is not the ID data (NO in step S416), the CPU 104 ends the processing without performing user authentication.

### <Processing by Mobile Terminal>

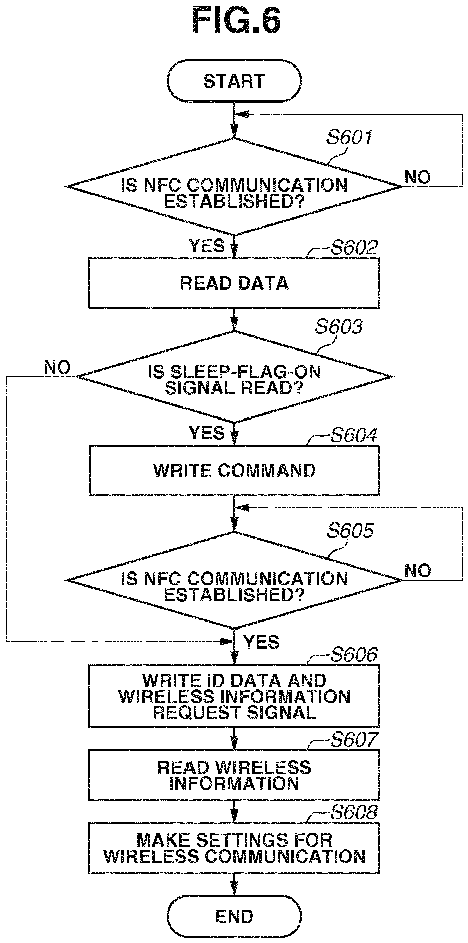

Fig. 6 is a flowchart illustrating a procedure of processing performed when the mobile terminal 300 establishes the wireless LAN communication 700. This processing is realized by causing the mobile terminal 300 to execute application software for setting wireless LAN communication. The application software is not limited to a single configuration. The processing can be realized by using a plurality of application software programs or by replacing part of an application software program with an operation by a user. The CPU 301 in the mobile terminal 300 executes this application software.

In step S601, the CPU 301 determines whether the user places the mobile terminal 300 close to the image forming apparatus 100 and the NFC communication 600 is established with the image forming apparatus 100 by the NFC control unit 307. If the CPU 301 determines that the user places the mobile terminal 300 close to the image forming apparatus 100 (YES in step S601), the operation proceeds to step S602. In step S602, the CPU 301 in the mobile terminal 300 reads data stored in the buffer 112 in the image forming apparatus 100 via the NFC communication 600. The read data is either a sleep-flag-on signal or a sleep-flag-off signal. Through the sleep-flag-on signal or the sleep-flag-off signal, the mobile terminal 300 is notified by the image forming apparatus 100 of the power supply state thereof.

In step S603, the CPU 301 determines whether the read data is a sleep-flag-on signal. If the read data is a sleep-flag-on signal (YES in step S603), the CPU 301 determines that the image forming apparatus 100 is in the low power consumption state, and the operation proceeds to step S604. In step S604, the CPU 301 writes a command in the buffer 112 in the image forming apparatus 100 via the NFC communication 600. This command is the command written in step S407 in Fig. 4. In accordance with the command, the image forming apparatus 100 displays the guiding image illustrated in Fig. 5. According to this guiding image, the user of the mobile terminal 300 places the mobile terminal 300 close to the image forming apparatus 100 again. With this operation, in step S605, the CPU 301 determines whether the NFC communication 600 is established again between the mobile terminal 300 and the image forming apparatus 100. If the NFC communication 600 is established (YES in step S605), the operation proceeds to step S606.

In step S606, the CPU 301 writes the ID data in the buffer 112 in the image forming apparatus 100 via the NFC communication 600. In addition, in step S606, the CPU 301 writes a wireless information request signal for requesting wireless information in the buffer 112 in the image forming apparatus 100 via the NFC communication 600. As a result, in step S413 in Fig. 4, the image forming apparatus 100 can perform user authentication. After the user authentication, in step S414 in Fig. 4, in response to the wireless information request signal, the image forming apparatus 100 writes wireless information in the buffer 112. The buffer 112 in the image forming apparatus 100 has a small storage capacity as described above. Therefore, the CPU 301 in the mobile terminal 300 may not be able to simultaneously write the ID data and the wireless information request signal in the buffer 112. In such a case, the CPU 301 in the mobile terminal 300 writes the wireless information request signal in the buffer 112 after a period of time sufficient for the CPU 104 in the image forming apparatus 100 to read the ID data from the buffer 112.

In step S607, the CPU 301 in the mobile terminal 300 reads the wireless information written in the buffer 112 via the NFC communication 600. In step S608, the CPU 301 makes settings for the wireless LAN communication 700 on the basis of the read wireless information and establishes the wireless LAN communication 700 with the image forming apparatus 100. Then, the CPU 301 ends the processing.

On the other hand, in step S603, if the data read in step S602 is a sleep-flag-off signal (NO in step S603), the CPU 301 in the mobile terminal 300 determines that the image forming apparatus 100 is in the normal power supply state. In this case, since the NFC communication 600 does not need to be established again, the CPU 301 in the mobile terminal 300 performs processing instep S606 and the subsequent steps.

### <Operational Embodiment>

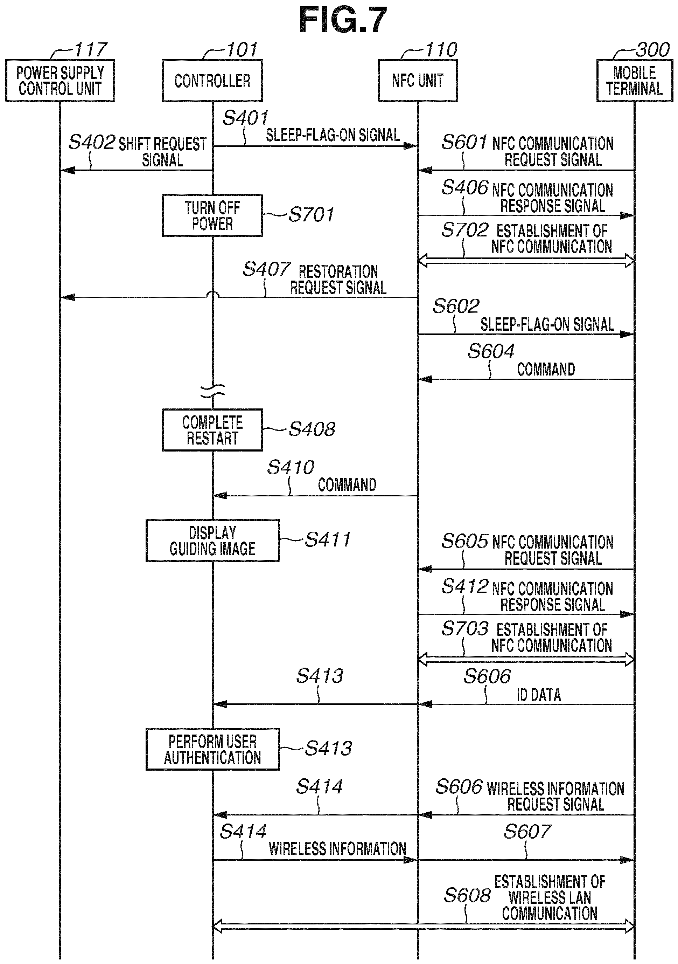

Fig. 7 is a connection sequence diagram illustrating a procedure for establishing the wireless LAN communication 700 between the image forming apparatus 100 and the mobile terminal 300. Since Fig. 7 includes the same steps as those in the flowcharts in Figs. 4 and 6, these steps are denoted by the same reference numerals.

When the image forming apparatus 100 shifts to the low power consumption state, the controller 101 in the image forming apparatus 100 transmits a sleep-flag-on signal to the NFC unit 110. In step S401, the CPU 104 writes the sleep-flag-on signal in the buffer 112 in the NFC unit 110. In step S402, the controller 101 transmits a shift request signal for requesting a shift to the low power consumption state to the power supply control unit 117. Accordingly, the image forming apparatus 100 shifts to the low power consumption state. In step S701, the power supply to the controller 101 is shut off.

In step S601, the mobile terminal 300 comes close to the image forming apparatus 100 in the low power consumption state, and the NFC control unit 307 in the mobile terminal 300 transmits an NFC communication request signal for requesting establishment of the NFC communication 600 to the NFC unit 110 in the image forming apparatus 100. In step S406, in response to the NFC communication request signal, the NFC unit 110 in the image forming apparatus 100 transmits an NFC communication response signal to the NFC control unit 307 in the mobile terminal 300. Thus, in step S702, the NFC communication 600 is established between the mobile terminal 300 and the image forming apparatus 100.

In step S407, after the NFC communication 600 is established, the NFC unit 110 in the image forming apparatus 100 issues a restoration request signal to the power supply control unit 117. In response to the restoration request signal, the power supply control unit 117 causes the power supply unit 116 to shift back to the normal power supply state and to supply power to each component.

In step S602, the mobile terminal 300 acquires a sleep-flag-on signal from the buffer 112 in the image forming apparatus 100 via the NFC communication 600 and determines that the image forming apparatus 100 is in the low power consumption state. In step S604, after determining that the image forming apparatus 100 is in the low power consumption state, the mobile terminal 300 writes a command for displaying a guiding image in the NFC unit 110 (the buffer 112) in the image forming apparatus 100 via the NFC communication 600. Normally, the mobile terminal 300 is moved away from the area in which the NFC communication 600 can be performed in approximately one second after the NFC communication 600 is established. Therefore, the NFC communication 600 between the mobile terminal 300 and the image forming apparatus 100 is interrupted in approximately one second after the NFC communication 600 is established. Thus, the NFC communication 600 is established temporarily. Therefore, the series of steps including writing the command is performed within one second after the NFC communication 600 is established.

In step S408, when the power supply is received from the power supply unit 116, the controller 101 in the image forming apparatus 100 is restarted. After restarted, the controller 101 reads the data written in the buffer 112 in the NFC unit 110. In step S410, the controller 101 reads the command written by the mobile terminal 300. In step S411, in response to the read command, the controller 101 displays the guiding image illustrated in Fig. 5 on the display of the operation unit 108.

In steps S605, S412, and S703, in accordance with the guiding image, the user of the mobile terminal 300 places the mobile terminal 300 close to the image forming apparatus 100 again, and the NFC communication 600 is established again through the same processing as that in steps S601 and S406. In step S606, after the NFC communication 600 is established, the mobile terminal 300 writes ID data in the NFC unit 110 (the buffer 112) in the image forming apparatus 100 via the NFC communication 600. In step S413, the controller 101 in the image forming apparatus 100 reads the ID data written in the buffer 112. As a result, the controller 101 in the image forming apparatus 100 acquires the ID data of the mobile terminal 300. In step S413, the controller 101 in the image forming apparatus 100 performs the user authentication processing using the ID data acquired from the mobile terminal 300.

In step S606, the mobile terminal 300 writes a wireless information request signal in the NFC unit 110 (the buffer 112) in the image forming apparatus 100 via the NFC communication 600 a predetermined period of time after writing the ID data. The "predetermined period of time" needs to be sufficiently long for the controller 101 in the image forming apparatus 100 to read the ID data in the buffer 112. In step S414, after the user authentication, the controller 101 in the image forming apparatus 100 reads the wireless information request signal written in the buffer 112. As a result, the controller 101 in the image forming apparatus 100 acquires the wireless information request signal. In step S414, in response to the wireless information request signal, the controller 101 writes wireless information in the buffer 112 in the NFC unit 110.

In step S607, the mobile terminal 300 reads the wireless information from the buffer 112 in the image forming apparatus 100 via the NFC communication 600. In step S608, the mobile terminal 300 establishes the wireless LAN communication 700 by using the wireless information read in the buffer 112 in the image forming apparatus 100. Then, the mobile terminal 300 ends the processing.

Through the above processing, the image forming apparatus 100 shifts from the low power consumption state and completes the user authentication of the mobile terminal 300. As a result, the wireless LAN communication 700 is established between the image forming apparatus 100 and the mobile terminal 300.

Next, a second exemplary embodiment of the present invention will be described. In the second exemplary embodiment, the image forming apparatus 100 performs user authentication and establishes the wireless LAN communication 700 without using a sleep-flag-on signal indicating that the image forming apparatus 100 is in the low power consumption state. Processing according to the second exemplary embodiment is performed in the same system as that illustrated in Fig. 1 according to the first exemplary embodiment. In addition, the image forming apparatus 100 and the mobile terminal 300 according to the second exemplary embodiment have similar configurations to those according to the first exemplary embodiment. Thus, redundant descriptions of the configurations of the system, the image forming apparatus 100, and the mobile terminal 300 will be avoided.

### <Processing by Image Forming Apparatus>

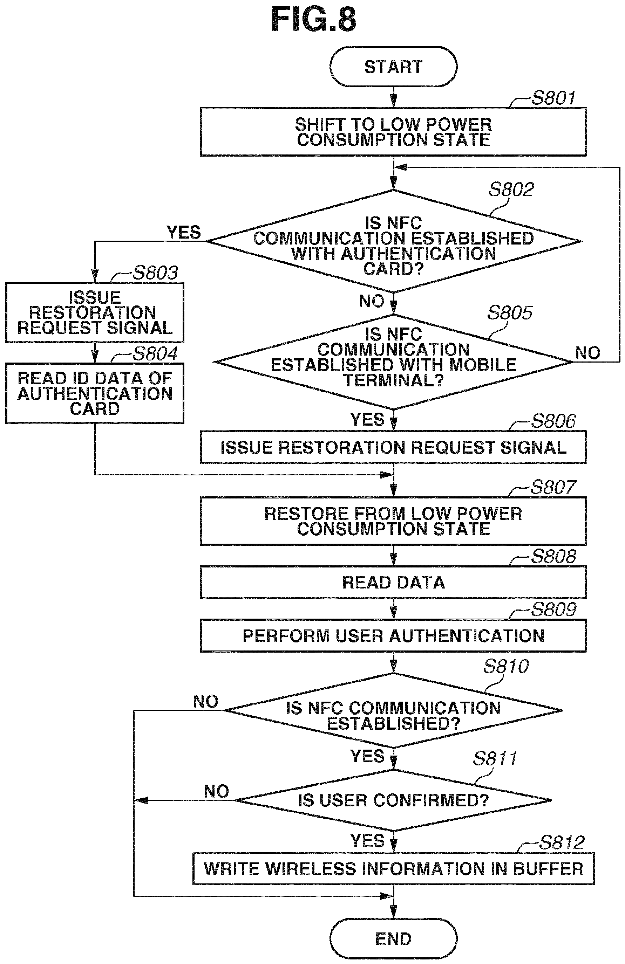

Fig. 8 is a flowchart illustrating a procedure of user authentication processing performed by the image forming apparatus 100 in the low power consumption state.

In step S801, when the image forming apparatus 100 is not used for a predetermined period of time or when the image forming apparatus 100 receives an instruction from a user via the operation unit 108, the CPU 104 in the image forming apparatus 100 causes the image forming apparatus 100 to shift to the low power consumption state. In steps S802 to S807, after the image forming apparatus 100 shifts to the low power consumption state, the CPU 104 performs the similar processing to that performed in steps S403 to S408 illustrated in Fig. 4 according to the first exemplary embodiment. As a result, the MP 114 issues a restoration request signal to the power supply control unit 117 and the power supply unit 116 shifts back to the normal power supply state. If an authentication card comes close to the image forming apparatus 100, ID data of this authentication card is written in the buffer 112 in the NFC unit 110. If the mobile terminal 300 comes close to the image forming apparatus 100, ID data of this mobile terminal 300 and a wireless information request signal are written in the buffer 112 in the NFC unit 110. However, the "command" used in the first exemplary embodiment is not written.

In step S808, after the image forming apparatus 100 shifts back to the normal power supply state, the CPU 104 reads the data from the buffer 112 in the NFC communication unit 111. In the buffer 112, the ID data of the authentication card or the ID data of the mobile terminal 300 is written. Therefore, the CPU 104 reads either one of the ID data. The CPU 104 also reads the wireless information request signal if such signal is written. In step S809, the CPU 104 performs user authentication suing the read ID data. The user authentication is performed in the similar way to that in step S413 illustrated in Fig. 4.

In step S810, after the user authentication is completed, the CPU 104 determines whether the mobile terminal 300 comes close to the image forming apparatus 100, and the NFC communication 600 is established again. If the CPU 104 determines that the mobile terminal 300 comes close to the image forming apparatus 100 (YES in step S810), the operation proceeds to step S811. In step S811, the CPU 104 in the image forming apparatus 100 acquires the ID data from the mobile terminal 300 again via the NFC communication 600 and determines whether the acquired ID data is the same ID data as the ID data authenticated in step S809. If the CPU 104 in the image forming apparatus 100 determines that the acquired ID data is the same ID data (YES in step S811), the operation proceeds to step S812. In step S812, in response to the wireless information request signal read in step S808, the CPU 104 writes wireless information in the buffer 112. Then, the CPU 104 ends the processing. The CPU 104 in the image forming apparatus 100 provides the wireless information to the mobile terminal 300 by writing the wireless information in the buffer 112. In step S810, if the mobile terminal 300 does not come close to the image forming apparatus 100 or if user authentication is performed on ID data of an authentication card (NO in step S810), the CPU 104 ends the processing without writing the wireless information in the buffer 112. If the ID data acquired in step S811 is not the same as the ID data authenticated in step S809 (NO in step S811), the CPU 104 ends the processing.

### <Processing by Mobile Terminal>

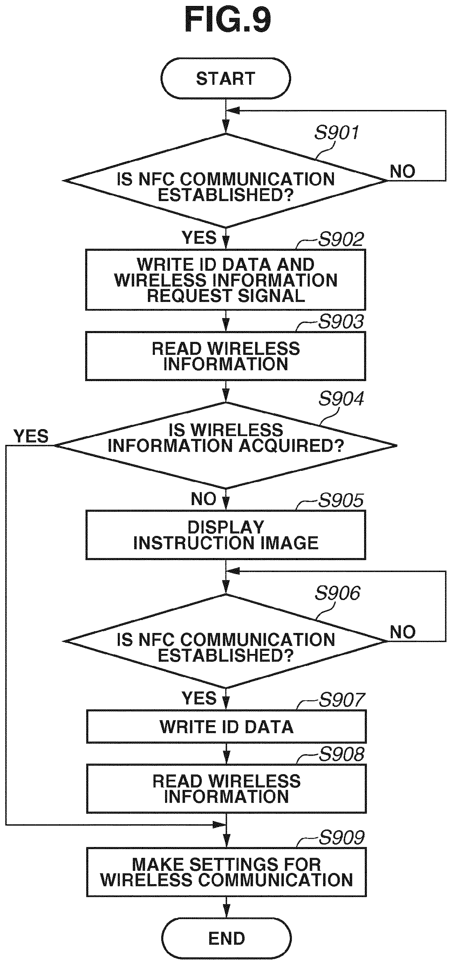

Fig. 9 is a flowchart illustrating a procedure of processing performed when the mobile terminal 300 establishes the wireless LAN communication 700. This processing is realized by causing the mobile terminal 300 to execute application software for setting wireless LAN communication. The application software is not limited to a single configuration. The processing can be realized by using a plurality of application software programs or by replacing part of an application software program with an operation by a user. The CPU 301 in the mobile terminal 300 executes this application software.

In step S901, the CPU 301 determines whether a user places the mobile terminal 300 close to the image forming apparatus 100 and the NFC control unit 307 establishes the NFC communication 600 with the image forming apparatus 100. If the CPU 301 determines that a user places the mobile terminal 300 close to the image forming apparatus 100 (YES in step S901), the operation proceeds to step S902. In step S902, the CPU 301 in the mobile terminal 300 writes ID data in the buffer 112 in the image forming apparatus 100 via the NFC communication 600. In addition, in step S902, the CPU 301 writes a wireless information request signal for requesting wireless information in the buffer 112 in the image forming apparatus 100 via the NFC communication 600. The buffer 112 in the image forming apparatus 100 has a storage capacity capable of storing the ID data and the wireless information request signal at once.

In step S903, after writing the ID data and the wireless information request signal, the CPU 301 in the mobile terminal 300 attempts to read the wireless information from the buffer 112 in the image forming apparatus 100 via the NFC communication 600. If the image forming apparatus 100 is in the normal power supply state, the CPU 301 in the mobile terminal 300 can read the wireless information. However, if the image forming apparatus 100 is in the low power consumption state, the CPU 301 in the mobile terminal 300 cannot acquire the wireless information. If the CPU 301 cannot acquire the wireless information in its first attempt, the CPU 301 may make a plurality of attempts to read the wireless information.

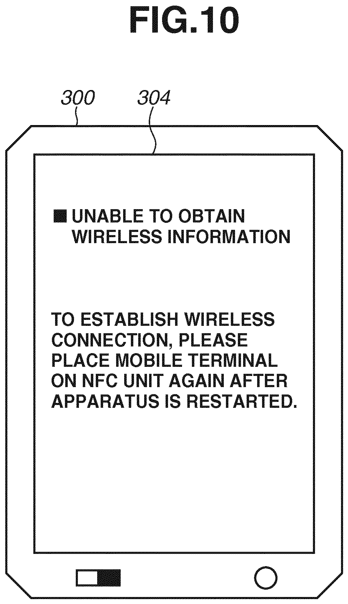

In step S904, the CPU 301 determines whether the wireless information is acquired. If the wireless information cannot be acquired (NO in step S904), the operation proceeds to step S905. In step S905, the CPU 301 in the mobile terminal 300 determines that the image forming apparatus 100 is in the low power consumption state and displays a guiding image illustrated in Fig. 10 on the display of the operation unit 304. This guiding image is to request the user to perform the NFC communication 600 again.

In step S906, the CPU 301 determines whether the user places the mobile terminal 300 close to the image forming apparatus 100 according to the guiding image and the NFC communication 600 is established again. If the CPU 301 determines whether the user places the mobile terminal 300 close to the image forming apparatus 100 (YES in step S906), the operation proceeds to step S907. In step S907, the CPU 301 in the mobile terminal 300 writes the ID data in the buffer 112 in the image forming apparatus 100 via the NFC communication 600. In step S811 in Fig. 8, the image forming apparatus 100 uses this ID data to confirm the user. After the user is confirmed, in response to the wireless information request signal, the image forming apparatus 100 writes wireless information in the buffer 112. In step S908, after the ID data is written, the CPU 301 in the mobile terminal 300 reads the wireless information from the buffer 112 in the image forming apparatus 100 via the NFC communication 600. In step S909, the CPU 301 makes settings for the wireless LAN communication 700 on the basis of the read wireless information to establish the wireless LAN communication 700 with the image forming apparatus 100. Then, the CPU 301 ends the processing.

On the other hand, in step S904, if the wireless information is acquired (YES in step S904), the operation proceeds to step S909. In step S909, the CPU 301 makes settings for the wireless LAN communication 700 on the basis of the acquired wireless information to establish the wireless LAN communication 700 with the image forming apparatus 100. Next, the CPU 301 ends the processing.

### <Operational Embodiment>

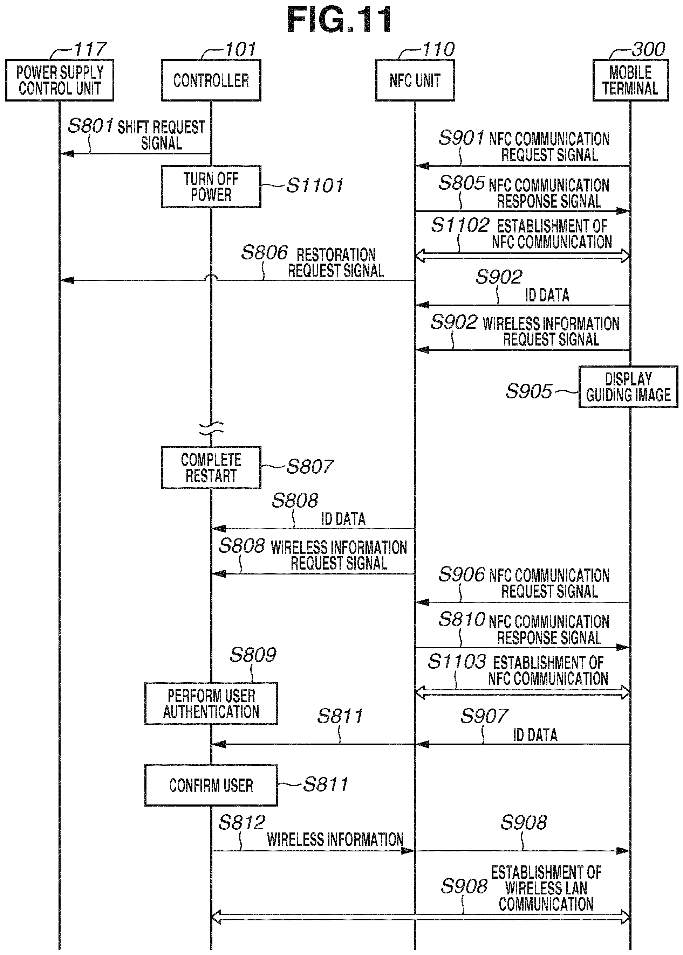

Fig. 11 is a connection sequence diagram illustrating a procedure for establishing the wireless LAN communication 700 between the image forming apparatus 100 and the mobile terminal 300. Since Fig. 11 includes the same steps as those in the flowcharts in Figs. 8 and 9, these steps are denoted by the same reference characters.

In step S801, the controller 101 in the image forming apparatus 100 transmits a shift request signal for requesting a shift to the low power consumption state to the power supply control unit 117. Accordingly, the image forming apparatus 100 shifts to the low power consumption state. In step S1101, the power supply to the controller 101 is shut off.

In step S901, the mobile terminal 300 comes close to the image forming apparatus 100, and the NFC control unit 307 in the mobile terminal 300 transmits an NFC communication request signal to the NFC unit 110 in the image forming apparatus 100. In step S805, in response to the NFC communication request signal, the NFC unit 110 in the image forming apparatus 100 transmits an NFC communication response signal to the NFC control unit 307 in the mobile terminal 300. As a result, in step S1102, the NFC communication 600 is established between the mobile terminal 300 and the image forming apparatus 100.

In step S806, after the NFC communication 600 is established, the NFC unit 110 in the image forming apparatus 100 issues a restoration request signal to the power supply control unit 117. In response to the restoration request signal, the power supply control unit 117 causes the power supply unit 116 to shift back to the normal power supply state and to supply power to each component.

In step S902, the mobile terminal 300 writes ID data in the NFC unit 110 (the buffer 112) in the image forming apparatus 100 via the NFC communication 600. In addition, in step S902, the mobile terminal 300 writes a wireless information request signal in the NFC unit 110 (the buffer 112) in the image forming apparatus 100 via the NFC communication 600. In step S905, if the mobile terminal 300 cannot acquire any wireless information in response to the wireless information request signal, the mobile terminal 300 displays the guiding image illustrated in Fig. 10 on the display of the operation unit 304. Normally, the mobile terminal 300 is moved away from the area in which the NFC communication 600 can be performed in approximately one second after the NFC communication 600 is established, whether or not acquisition of wireless information is succeeded. Therefore, the NFC communication 600 between the mobile terminal 300 and the image forming apparatus 100 is interrupted in approximately one second after the NFC communication 600 is established. Thus, the NFC communication 600 is established temporarily.

In step S807, when the power supply is received from the power supply unit 116, the controller 101 in the image forming apparatus 100 is restarted. After restarted, in step S808, the controller 101 reads the data written in the buffer 112 in the NFC unit 110. In this case, the controller 101 reads the ID data and the wireless information request signal written by the mobile terminal 300. In step S809, the controller 101 performs user authentication using the read ID data.

In steps S906, S810, and S1103, in accordance with the guiding image, the user of the mobile terminal 300 places the mobile terminal 300 close to the image forming apparatus 100 again, and the NFC communication 600 is established again through the similar processing to that in steps S901 and S805. In step S907, after the NFC communication 600 is established, the mobile terminal 300 writes the ID data in the NFC unit 110 (the buffer 112) in the image forming apparatus 100 via the NFC communication 600.

In step S811, the controller 101 in the image forming apparatus 100 reads the ID data from the buffer 112 in the NFC unit 110 again and determines whether the acquired ID data is the same as the authenticated user ID. In step S811, if the user ID is the same as the authenticated user ID, in response to the wireless information request signal read in step S808, the controller 101 in the image forming apparatus 100 writes wireless information in the buffer 112 in the NFC unit 110. In step S908, the mobile terminal 300 reads the wireless information from the buffer 112 in the image forming apparatus 100 via the NFC communication 600. In step S909, the mobile terminal 300 establishes the wireless LAN communication 700 by using the wireless information read from the buffer 112 in the image forming apparatus 100. Then, the mobile terminal 300 ends the processing.

Through the above processing, the image forming apparatus 100 completes the user authentication of the mobile terminal 300. As a result, the wireless LAN communication 700 is established between the image forming apparatus 100 and the mobile terminal 300.

As described above, according to the first and second exemplary embodiments, even when the image forming apparatus 100 receives a request for the NFC communication 600 from the mobile terminal 300 while operating in the low power consumption state, the image forming apparatus 100 can immediately shift to the normal operation and perform user authentication on the mobile terminal 300. In addition, the image forming apparatus 100 can perform predetermined processing (establishment of the wireless LAN communication 700) after the user authentication via the NFC communication 600 established again after the image forming apparatus 100 shifts back to the normal power supply state.

According to the first and second exemplary embodiments, if the image forming apparatus 100 receives a request for establishing the NFC communication 600 while operating in the low power consumption state, the image forming apparatus 100 displays the guiding image for requesting the user to place the mobile terminal 300 close to the image forming apparatus 100 again. However, in place of the guiding image, the image forming apparatus 100 and/or the mobile terminal 300 may use voice to request the user to place the mobile terminal 300 close to the image forming apparatus 100. Alternatively, the mobile terminal 300 may be vibrated to request the user to place the mobile terminal 300 close to the image forming apparatus 100.

According to the present invention, if short-distance wireless communication is performed in a low power consumption state, the user of a peer apparatus in the short-distance wireless communication is requested to perform the short-distance wireless communication again. If the user performs the short-distance wireless communication again in response to the request, processing via the short-distance wireless communication such as user authentication can be performed. Thus, even if an apparatus is in a low power consumption state when the first short-distance wireless communication is performed, subsequent processing can be performed.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (100) capable of operating in a first power mode and a second power mode requiring less power consumption than that in the first power mode, the image processing apparatus (100) comprising:
a first communication means (110) configured to perform short-distance wireless communication (600);
a shift means (104, 117) configured to cause, when the image processing apparatus (100) establishes communication with another apparatus (300) via the first communication means (110) while operating in the second power mode, the image processing apparatus (100) to shift from the second power mode to the first power mode; and
a guiding means (104) configured to guide (S411), when the shift means (104, 117) causes the image processing apparatus (100) to shift to the first power mode, a user of the other apparatus (300) to perform an action for establishing communication via the first communication means (110) again.

2. The image processing apparatus (100) according to claim 1, further comprising:
an authentication means configured to perform, when the image processing apparatus (100) establishes communication with the other apparatus (300) via the first communication means (110) again after the shift means (104, 117) causes the image processing apparatus (100) to shift to the first power mode, authentication (S413) of the other apparatus (300); and
a transmission means (101, 112) configured to transmit (S607), when the authentication means succeeds the authentication of the other apparatus (300), communication information (S414) for performing communication (S608) via a second communication means (700) different from the first communication means (110) to the other apparatus (300).

3. The image processing apparatus (100) according to claim 1,
wherein communication via a second communication means (700) with the other apparatus (300) is established using (S414, S607) communication information transmitted by the transmission means (101, 112).

4. The image processing apparatus (100) according to claim 1, further comprising:
a notification means (104, 112) configured to notify (S401), when the image processing apparatus (100) establishes communication with the other apparatus (300) via the first communication means (110) while operating in the second power mode, the other apparatus (300) that the image processing apparatus (100) is operating in the second power mode,
wherein, on the basis of a guiding instruction (S604) transmitted from the other apparatus (300) in response to the notification (S401) by the notification means (104, 112), the guiding means (104) guides the user of the other apparatus (300) to perform the action for establishing communication via the first communication means (110) again.

5. The image processing apparatus (100) according to claim 1,
wherein the first communication means (110) performs communication with a communication partner by causing the communication partner to read data stored in a buffer (112) for short-distance wireless communication (600) included in the image processing apparatus (100) or by causing the communication partner to write data in the buffer (112).

6. The image processing apparatus (100) according to claim 1,
wherein the first communication means (110) can regularly switch a reader/writer function capable of reading data written in a tag of a communication partner or writing data in a tag of the communication partner, and a tag function capable of causing the communication partner to read data written in a tag of the image processing apparatus (100) or causing the communication partner to write data in the tag of the image processing apparatus (100).

7. The image processing apparatus (100) according to claim 2,
wherein the second communication means performs wireless communication (600) via a wireless LAN (700).

8. The image processing apparatus (100) according to claim 1, further comprising a scanner means (102) configured to read an image of a document and generate image data,
wherein, in the first power mode, at least the scanner means (102) and the communication means are supplied with power, and
wherein, in the second power mode, at least the scanner means (102) is not supplied with power and the communication means is supplied with power.

9. A method for controlling an image processing apparatus (100) capable of operating in a first power mode and a second power mode requiring less power consumption than that in the first power mode, the method comprising:
Causing (S404), when the image processing apparatus (100) establishes short-distance wireless communication (600) with an another apparatus (300) while operating in the second power mode, the image processing apparatus (100) to shift from the second power mode to the first power mode; and
Guiding (S411), when the image processing apparatus (100) shifts to the first power mode, a user of the other apparatus (300) to perform an action for establishing the short-distance wireless communication (600) again.

10. A computer-readable storage medium for storing a program for causing a computer to execute the method according to claim 9.

11. A computer-executable program for causing a computer to execute the method according to claim 9.

## Patentansprüche

1. Bildverarbeitungsvorrichtung (100), die in einem ersten Leistungsmodus und in einem zweiten Leistungsmodus, der eine geringere Leistungsaufnahme als die im ersten Leistungsmodus benötigt, zu arbeiten vermag, wobei die Bildverarbeitungsvorrichtung (100) umfasst:
eine erste Kommunikationseinrichtung (110), die konfiguriert ist, eine Nahbereichsdrahtloskommunikation (600) durchzuführen;
eine Umstellungseinrichtung (104, 117), die konfiguriert ist, wenn die Bildverarbeitungsvorrichtung (100) eine Kommunikation mit einer weiteren Vorrichtung (300) über die erste Kommunikationseinrichtung (110) aufbaut, während sie im zweiten Leistungsmodus arbeitet, die Bildverarbeitungsvorrichtung (100) zu veranlassen, vom zweiten Leistungsmodus in den ersten Leistungsmodus umzustellen; und
eine Anleitungseinrichtung (104), die konfiguriert ist, wenn die Umstellungseinrichtung (104, 117) die Bildverarbeitungsvorrichtung (100) veranlasst, in den ersten Leistungsmodus umzustellen, einen Benutzer der weiteren Vorrichtung (300) anzuleiten (S411), eine Aktion zum Aufbau einer Kommunikation über die erste Kommunikationseinrichtung (110) wieder durchzuführen.

2. Bildverarbeitungsvorrichtung (100) nach Anspruch 1, weiterhin umfassend:
eine Authentifizierungseinrichtung, die konfiguriert ist, wenn die Bildverarbeitungsvorrichtung (100) eine Kommunikation mit der weiteren Vorrichtung (300) über die erste Kommunikationseinrichtung (110) wieder aufbaut, nachdem die Umstellungseinrichtung (104, 117) die Bildverarbeitungsvorrichtung (100) veranlasst, in den ersten Leistungsmodus umzustellen, eine Authentifizierung (S413) der weiteren Vorrichtung (300) durchzuführen; und
eine Übertragungseinrichtung (101, 112), die konfiguriert ist, wenn der Authentifizierungseinrichtung die Authentifizierung der weiteren Vorrichtung (300) gelingt, Kommunikationsinformation (S414) zum Durchführen einer Kommunikation (S608) über eine von der ersten Kommunikationseinrichtung (110) verschiedene zweite Kommunikationseinrichtung (700) an die weitere Vorrichtung (300) zu übertragen (S607).

3. Bildverarbeitungsvorrichtung (100) nach Anspruch 1,
wobei eine Kommunikation über eine zweite Kommunikationseinrichtung (700) mit der weiteren Vorrichtung (300) unter der Verwendung (S414, S607) von durch die Übertragungseinrichtung (101, 112) übertragener Kommunikationsinformation aufgebaut wird.

4. Bildverarbeitungsvorrichtung (100) nach Anspruch 1, weiterhin umfassend:
eine Benachrichtigungseinrichtung (104, 112), die konfiguriert ist, wenn die Bildverarbeitungsvorrichtung (100) eine Kommunikation mit der weiteren Vorrichtung (300) über die erste Kommunikationseinrichtung (110) aufbaut, während sie im zweiten Leistungsmodus arbeitet, die weitere Vorrichtung (300) zu benachrichtigen (S401), dass die Bildverarbeitungsvorrichtung (100) gerade im zweiten Leistungsmodus arbeitet,
wobei die Anleitungseinrichtung (104) auf der Basis einer von der weiteren Vorrichtung (300) ansprechend auf die Benachrichtigung (S401) durch die Benachrichtigungseinrichtung (104, 112) übertragenen Anleitungsanweisung (S604) den Benutzer der weiteren Vorrichtung (300) anleitet, die Aktion zum Aufbau einer Kommunikation über die erste Kommunikationseinrichtung (110) wieder durchzuführen.

5. Bildverarbeitungsvorrichtung (100) nach Anspruch 1,
wobei die erste Kommunikationseinrichtung (110) eine Kommunikation mit einem Kommunikationspartner durchführt, indem sie den Kommunikationspartner veranlasst, Daten zu lesen, die in einem in der Bildverarbeitungsvorrichtung (100) enthaltenen Puffer (112) für Nahbereichsdrahtloskommunikation (600) gespeichert sind, oder indem sie den Kommunikationspartner veranlasst, Daten in den Puffer (112) zu schreiben.

6. Bildverarbeitungsvorrichtung (100) nach Anspruch 1,
wobei die erste Kommunikationseinrichtung (110) regelmäßig eine Lese-/Schreibfunktion umschalten kann, die in ein Tag eines Kommunikationspartners geschriebene Daten zu lesen oder Daten in ein Tag des Kommunikationspartners zu schreiben vermag, und eine Tag-Funktion, die den Kommunikationspartner zu veranlassen vermag, in ein Tag der Bildverarbeitungsvorrichtung (100) geschriebene Daten zu lesen, oder den Kommunikationspartner zu veranlassen vermag, in das Tag der Bildverarbeitungsvorrichtung (100) Daten zu schreiben.

7. Bildverarbeitungsvorrichtung (100) nach Anspruch 2,
wobei die zweite Kommunikationseinrichtung eine Drahtloskommunikation (600) über ein drahtloses LAN (700) durchführt.

8. Bildverarbeitungsvorrichtung (100) nach Anspruch 1,
weiterhin umfassend eine Scannereinrichtung (102), die konfiguriert ist, ein Bild eines Dokuments zu lesen und Bilddaten zu erzeugen,
wobei im ersten Leistungsmodus wenigstens die Scannereinrichtung (102) und die erste Kommunikationseinrichtung mit Energie versorgt werden, und
wobei im zweiten Leistungsmodus wenigstens die Scannereinrichtung (102) nicht mit Energie versorgt wird und die erste Kommunikationseinrichtung mit Energie versorgt wird.

9. Verfahren zum Steuern einer Bildverarbeitungsvorrichtung (100), die in einem ersten Leistungsmodus und in einem zweiten Leistungsmodus, der eine geringere Leistungsaufnahme als die im ersten Leistungsmodus benötigt, zu arbeiten vermag, wobei das Verfahren umfasst:
Veranlassen (S404) der Bildverarbeitungsvorrichtung (100), wenn die Bildverarbeitungsvorrichtung (100) Nahbereichsdrahtloskommunikation (600) mit einer weiteren Vorrichtung (300) aufbaut, während sie im zweiten Leistungsmodus arbeitet, vom zweiten Leistungsmodus in den ersten Leistungsmodus umzustellen; und
Anleiten (S411) eines Benutzers der weiteren Vorrichtung (300), wenn die Bildverarbeitungsvorrichtung (100) in den ersten Leistungsmodus umstellt, eine Aktion zum Aufbau der Nahbereichsdrahtloskommunikation (600) wieder durchzuführen.

10. Computerlesbares Speichermedium zum Speichern eines Programms, um einen Computer zu veranlassen, das Verfahren nach Anspruch 9 auszuführen.

11. Computerausführbares Programm zum Veranlassen eines Computers, das Verfahren nach Anspruch 9 auszuführen.

## Revendications

1. Appareil de traitement d'images (100) capable de fonctionner dans un premier mode d'alimentation et dans un second mode d'alimentation, nécessitant une moindre consommation d'énergie que le premier mode d'alimentation, l'appareil de traitement d'images (100) comprenant :
un premier moyen de communication (110) configuré pour effectuer des communications sans fil à courte distance (600) ;
un moyen de commutation (104, 117) configuré pour, lorsque l'appareil de traitement d'images (100) établit une communication avec un autre appareil (300) à l'aide du premier moyen de communication (110) alors qu'il fonctionne dans le second mode d'alimentation, commander à l'appareil de traitement d'images (100) de passer du second mode d'alimentation au premier mode d'alimentation ; et
un moyen de guidage (104) configuré pour, lorsque le moyen de commutation (104, 117) commande à l'appareil de traitement d'images (100) de commuter dans le premier mode d'alimentation, guider (S411) un utilisateur de l'autre appareil (300) dans l'exécution d'une action destinée à rétablir la communication via le premier moyen de communication (110).

2. Appareil de traitement d'images (100) selon la revendication 1, comprenant en outre :
un moyen d'authentification configuré pour, lorsque l'appareil de traitement d'images (100) rétablit la communication avec l'autre appareil (300) via le premier moyen de communication (110) après que le moyen de commutation (104, 117) a commandé à l'appareil de traitement d'images (100) de passer dans le premier mode d'alimentation, effectuer l'authentification (S413) de l'autre appareil (300) ; et
un moyen d'émission (101, 112) configuré pour émettre (S607), lorsque le moyen d'authentification réussit l'authentification de l'autre appareil (300), des informations de communication (S414) afin d'effectuer la communication (S608) avec l'autre appareil (300) via un second moyen de communication (700), différent du premier moyen de communication (110).

3. Appareil de traitement d'images (100) selon la revendication 1, dans lequel la communication avec l'autre appareil (300) via un second moyen de communication (700) est établie (S414, S607) à l'aide d'informations de communication émises par le moyen d'émission (101, 112).

4. Appareil de traitement d'images (100) selon la revendication 1, comprenant en outre :
un moyen de notification (104, 112) configuré pour, lorsque l'appareil de traitement d'images (100) établit la communication avec l'autre appareil (300) via le premier moyen de communication (110) alors qu'il fonctionne dans le second mode d'alimentation, notifier (S401) à l'autre appareil (300) que l'appareil de traitement d'images (100) fonctionne dans le second mode d'alimentation ;
dans lequel, en fonction d'une instruction de guidage (S604) émise par l'autre appareil (300) en réponse à la notification (S401) effectuée par le moyen de notification (104, 112), le moyen de guidage (104) guide l'utilisateur de l'autre appareil (300) pour effectuer l'action destinée à rétablir la communication via le premier moyen de communication (110).

5. Appareil de traitement d'images (100) selon la revendication 1, dans lequel le premier moyen de communication (110) effectue la communication avec un partenaire de communication en commandant au partenaire de communication de lire des données stockées dans une mémoire tampon (112) pour communication sans fil à courte distance (600) qui est incluse dans l'appareil de traitement d'images (100) ou en commandant au partenaire de communication d'écrire des données dans la mémoire tampon (112).

6. Appareil de traitement d'images (100) selon la revendication 1, dans lequel le premier moyen de communication (110) peut commuter régulièrement une fonction de lecture/écriture capable de lire des données écrites dans une balise du partenaire de communication ou d'écrire des données dans une balise du partenaire de communication et une fonction de balise capable de commander au partenaire de communication de lire des données écrites dans une balise de l'appareil de traitement d'images (100) ou de commander au partenaire de communication d'écrire des données dans la balise de l'appareil de traitement d'images (100).

7. Appareil de traitement d'images (100) selon la revendication 2, dans lequel le second mode d'alimentation effectue les communications sans fil (600) via un réseau local sans fil (700).

8. Appareil de traitement d'images (100) selon la revendication 1, comprenant en outre un moyen de numérisation (102) configuré pour lire une image d'un document et produire des données d'image ;
dans lequel, dans le premier mode d'alimentation, au moins le moyen de numérisation (102) et le moyen de communication sont alimentés en énergie ; et
dans lequel, dans le second mode d'alimentation, au moins le moyen de numérisation (102) n'est pas alimenté en énergie et le moyen de communication est alimenté en énergie.

9. Procédé de commande d'un appareil de traitement d'images (100) capable de fonctionner dans un premier mode d'alimentation et dans un second mode d'alimentation, nécessitant une moindre consommation d'énergie que le premier mode d'alimentation, le procédé comprenant les étapes consistant à :
lorsque l'appareil de traitement d'images (100) établit une communication sans fil à courte distance (600) avec un autre appareil (300) alors qu'il fonctionne dans le second mode d'alimentation, commander (S404) à l'appareil de traitement d'images (100) de passer du second mode d'alimentation au premier mode d'alimentation ; et
lorsque l'appareil de traitement d'images (100) commute dans le premier mode d'alimentation, guider (S411) un utilisateur de l'autre appareil (300) dans l'exécution d'une action destinée à rétablir la communication sans fil à courte distance (600).

10. Support de stockage lisible par ordinateur, destiné à stocker un programme pour commander à un ordinateur d'exécuter le procédé selon la revendication 9.

11. Programme exécutable par ordinateur, destiné à commander à un ordinateur d'exécuter le procédé selon la revendication 9.
